# DEMANDE DE BREVET EUROPEEN

(11) **EP 2 110 099 A1**
(43) Date de publication de la demande: **21.10.2009**
(21) Numéro de dépôt: 09290271.7
(22) Date de dépôt: 10.04.2009
(51) Int. Cl.: A61C 13/30

(54) **Pivot radiculaire démontable à filetage progressif de profondeur variable**

(30) Priorité: 16.04.2008 FR 0852548
(71) Demandeur: Malek, Pierre, Key Biscayne, FL 33149 (US)
(72) Inventeur: Malek, Pierre, Key Biscayne, FL 33149 (US)
(74) Mandataire: Novagraaf IP

(57) **Abrégé**

La présente invention concerne un pivot radiculaire constitué par une tige (1) présentant une partie filetée (2) **caractérisé en ce que** la distance entre l'enveloppe conique intérieure (6) passant par le fond des filets d'une part et l'enveloppe conique extérieure (5) passant par les sommets des filets augmente en direction de l'extrémité apicale (3), sur une partie proximale au moins de la longueur du filetage.

## Description

La présente invention concerne le domaine des pivots dentaires. Un pivot dentaire est constitué par une structure cylindrique de trois à vingt millimètres de long, pouvant être couronnée. Le pivot dentaire est destiné à l'ancrage au niveau de la racine de la dent par un ciment. Le pivot présente un filetage extérieur et se visse dans la racine de la dent sensiblement verticalement dans la région du canal radiculaire de manière à former une liaison amovible entre le pivot d'ancrage et la racine de la dent.

On connaît le brevet EP0305934 décrivant un pivot dentaire qui présente une tige dont la partie apicale est cylindrique, qui est suivie d'une partie cervicale tronconique se prolongeant par une tête adjacente à la partie tronconique. La tête sert à la reconstitution, en composite ou en amalgame, d'un moignon destiné à recevoir une couronne dentaire. La tête est de section non circulaire ce qui correspond mieux à la forme d'une dent naturelle que si elle était de forme circulaire, mais nécessite de pouvoir orienter le pivot lorsqu'il est en place dans le canal radiculaire, après préparation endodontique de celui-ci, en fonction de l'arc dentaire.

On connaît aussi des pivots présentant une tige filetée sur une partie de sa longueur. Le brevet américain US4334865 décrit un tel pivot présentant une extrémité filetée, permettant l'ancrage à l'aide d'un ciment ou une pâte de scellage. Ce pivot peut être réalisé en titane ou encore en un matériau de synthèse.

Le problème qui se pose avec de tels pivots est celui du démontage. En effet, les efforts qu'il faut exercer sur le pivot en vue de son démontage sont élevés pour un pivot de type connu, et doivent être exercés de manière constante jusqu'au retrait du pivot. Ces efforts peuvent conduire à l'éclatement de la racine.

Le but de la présente invention est de remédier à cet inconvénient en proposant un pivot fileté permettant un démontage avec des efforts limités, et plus particulièrement permettant de limiter sensiblement les efforts après une première rotation partielle assurant un descellement.

À cet effet, l'invention concerne selon son acception la plus générale un pivot radiculaire constitué par une tige présentant une partie filetée **caractérisée en ce que** la distance entre l'enveloppe conique intérieure passant par le fond des filets d'une part et l'enveloppe conique extérieure passant par les sommets des filets augmente vers l'extrémité apicale, sur une partie au moins de la longueur du filetage.

Avantageusement, l'une au moins desdites enveloppes présente une section décroissante vers l'extrémité apicale.

De préférence, les deux enveloppes intérieure et extérieure présentent une section décroissante vers l'extrémité apicale.

Selon une variante particulière, le pivot présente sur la partie apicale conique une amorce de filetage dont la profondeur croît en direction de la tête du pivot.

Selon une autre variante, le pivot selon l'invention présente une extrémité distale conique lisse.

Avantageusement, le filetage présente des filets de section trapézoïdale.

Selon une variante, le filetage présente des filets de section semi-circulaire, carrée ou triangulaire.

Selon un premier mode de réalisation, le filetage est positif. On désignera par positif un filetage où les arêtes présentent une section supérieure au logement effectué et pénètrent de ce fait dans la paroi endodontique.

Selon un autre mode de réalisation, le filetage est négatif. On désignera par négatif un filetage dont les arêtes présentent une section inférieure au logement effectué, et dont les arêtes viennent affleurer la paroi endodontique.

L'invention sera mieux comprise à la lecture de la description détaillée qui suit, se référant aux dessins annexés où :
- La figure 1 représente une vue schématique d'un pivot selon l'invention
- La figure 2 représente une vue de face d'un deuxième exemple de réalisation d'un tel pivot.

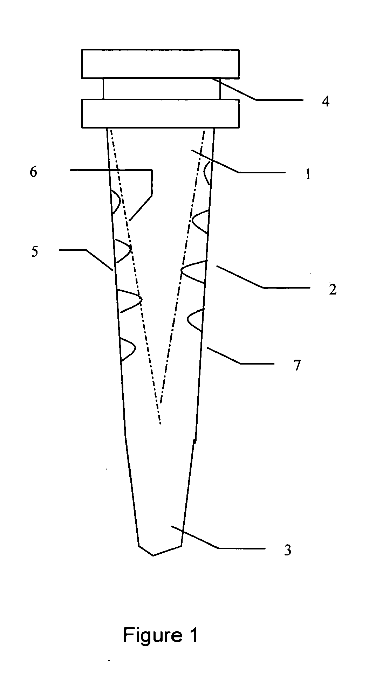

La figure 1 représente une vue schématique d'un pivot selon l'invention. Il est constitué par une tige (1) en titane ou en fibre de verre ou de carbone présentant une zone intermédiaire (2) filetée. La forme générale de la tige (1) est conique, avec une section décroissante vers l'extrémité apicale (3). La tête (4) présente de façon connue un moyen d'accrochage d'une couronne.

La partie filetée (2) présente un filetage hélicoïdal qui, selon l'invention, présente une profondeur variable. Sur la plus grande partie du filetage, la profondeur des filets est croissante en direction de l'extrémité apicale. Toutefois, selon une variante décrite sur la figure 1, le filetage présente une amorce (7), c'est-à-dire la partie du filetage la plus proche de l'extrémité apicale (3), où la profondeur des filets est croissante en direction de la tête.

L'enveloppe extérieure (5) des arêtes de la partie supérieure du filetage (2) présente la forme d'un cône tronqué dont la section décroît en direction de l'extrémité apicale (3). L'enveloppe extérieure (5) est la surface conique qui passe par le sommet des filets, dans la partie supérieure du pivot. Elle peut être cylindrique, de section constante, ou conique, de section décroissante en direction de l'extrémité apicale (3).

L'enveloppe intérieure (6) des arêtes de la partie supérieure du filetage (2) présente également la forme d'un cône tronqué dont la section décroît en direction de l'extrémité apicale (3).

L'enveloppe intérieure (6) est la surface conique qui passe par le fond des filets, dans la partie supérieure du pivot. Elle est conique, de section décroissante en direction de l'extrémité apicale (3) au moins jusqu'au niveau de l'amorce (7) du filetage.

Selon l'invention, la pente de l'enveloppe extérieure (5) est inférieure à la pente de l'enveloppe intérieure (6), en d'autres termes la distance radiale entre l'enveloppe extérieure (5) et l'enveloppe intérieure (6) augmente en direction de l'extrémité apicale (3), au moins jusqu'à l'amorce (7) où la profondeur des filets décroît.

Cette réalisation permet de réduire les efforts qui s'exercent entre le pivot et la racine lors du démontage : lorsque le pivot est débloqué par un début de rotation, l'ancrage de la pâte de scellement se réduit rapidement en raison de la configuration particulière des filets.

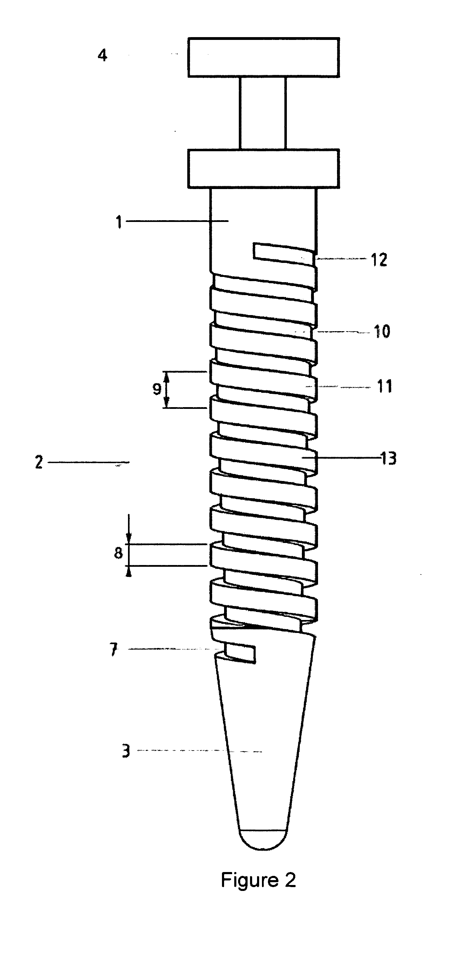

La figure 2 représente une vue de face d'un exemple détaillé de réalisation non limitatif.

Le pivot présente une longueur totale de 10,5 millimètres. La tête couronnée (4) présente une longueur de 2,30 millimètres.

La section de la tige (1), à l'extrémité proximale opposée à l'extrémité apicale (3), est de 1,40 millimètres. Cette partie de la tige est cylindrique, avec une section constante. À son extrémité apicale (3), la section décroît pour présenter la forme générale d'un cône avec une pente d'environ 3° dont l'extrémité est ogivale ou semi-sphérique.

La partie filetée (2) présente un pas (9) de 0,5 millimètres. La largeur du fond des filets est de 0,14 millimètres, et la largeur de la partie protubérante (8) des filets est de 0,3 millimètres. La forme des filets est sensiblement trapézoïdale, avec un fond (10) de section plane et une partie protubérante (11, 13) de section plane.

L'invention ne se limite pas à des filets à coupe trapézoïdale, et s'étend à tout type de filets.

La profondeur des filets augmente depuis l'extrémité proximale (12) située à 0,5 millimètres de la tête couronnée (4), et le début de l'amorce (7).

La profondeur varie, en augmentant vers l'extrémité apicale (3), entre une profondeur nulle et une profondeur d'un millimètre, avant de décroître au niveau de l'amorce (7). Par contre, l'enveloppe extérieure passant par les sommets des filets présente une section constante ou décroissante continûment sur toute la longueur du filetage, en direction de l'extrémité apicale (3).

## Revendications

1. Pivot radiculaire constitué par une tige (1) présentant une partie filetée (2) **caractérisé en ce que** la distance entre l'enveloppe conique intérieure (6) passant par le fond des filets d'une part et l'enveloppe conique extérieure (5) passant par les sommets des filets augmente en direction de l'extrémité apicale (3), sur une partie proximale au moins de la longueur du filetage.

2. Pivot radiculaire selon la revendication 1, **caractérisé en ce que** les deux enveloppes du filetage extérieure (5) et intérieure (6) présentent une section décroissante vers l'extrémité apicale (3).

3. Pivot radiculaire selon l'une quelconque des revendications précédentes, **caractérisé en ce qu'**il présente une amorce filetée distale (7) où la profondeur du filetage croît en direction de la tête (4).

4. Pivot radiculaire selon la revendication 3, **caractérisé en ce que** l'enveloppe extérieure (5) du filetage présente une section constante et **caractérisé en ce que** l'enveloppe intérieure (6) de la partie du filetage en amont de l'amorce (7) présente une section décroissante vers l'extrémité apicale (3).

5. Pivot radiculaire selon l'une quelconque des revendications précédentes, **caractérisé en ce qu'**il présente une extrémité distale conique lisse.

6. Pivot radiculaire selon l'une quelconque des revendications précédentes, **caractérisé en ce que** le filetage présente des filets de section trapézoïdale.

7. Pivot radiculaire selon l'une quelconque des revendications 1 à 5, **caractérisé en ce que** le filetage présente des filets de section semi-circulaires.

8. Pivot radiculaire selon l'une quelconque des revendications 1 à 5, **caractérisé en ce que** le filetage présente des filets de section triangulaires.

9. Pivot radiculaire selon l'une quelconque des revendications 1 à 5, **caractérisé en ce que** le filetage présente des filets de section carrée.

10. Pivot radiculaire selon l'une quelconque des revendications précédentes, **caractérisé en ce que** le filetage est positif.

11. Pivot radiculaire selon l'une quelconque des revendications 1 à 9, **caractérisé en ce que** le filetage est négatif.
